# EUROPEAN PATENT APPLICATION

(11) **EP 0 661 640 A1**
(43) Date of publication of application: **05.07.1995**
(21) Application number: 94309429.2
(22) Date of filing: 16.12.1994
(51) Int. Cl.: G06F 12/08

(54) **System and method for accessing data in a computer system including a cache controller and a memory controller connected in parallel**

(30) Priority: 30.12.1993 US 175863
(71) Applicant: International Business Machines Corporation, Armonk, N.Y. 10504 (US)
(72) Inventor: Chan, Fu Lam, Boynton Beach, Florida 33437 (US); Hernandez, Luis Antonio, Delray Beach, Florida 33445 (US); Lenta, Jorge Eduardo, Boca Raton, Florida 33486 (US); Riley, Dwight Delano, Ft. Lauderdale, Florida 33326 (US); Tashakori, Esmaeil, Boca Raton, Florida 33498 (US)
(74) Representative: Davies, Simon Robert

(57) **Abstract**

Disclosed is a personal computer system which eliminates an extra bus state for all memory cycles and I/O cycles that require main memory access. The computer system includes a cache controller disposed in parallel with a memory controller. A control signal is provided from the cache controller to the memory controller during a first bus state of a cache miss cycle to allow the memory controller to process the cycle. By generating the control signal during the first bus state, the memory controller can complete the cache miss cycle without incurring a penalty.

## Description

This invention relates to a system and method for accessing data.

Modern high speed electronic data processing systems often comprise a processor or CPU and a hierarchical memory system including a high capacity relatively low speed main memory whose cycle time is much less than the cycle time of the processor and a relatively low capacity high speed memory, conventionally known as a cache, which has a memory cycle time comparable to the cycle time of the processor. Such cache memory systems are well known in the art for reducing effective memory access time.

There are several cache levels in current hierarchical memory systems. For example, most high speed microprocessors (e.g., Intel 80486), have an internal or private cache (L1) in order to satisfy the increasing demands of application programs for more memory and faster operating speeds. In order to further reduce the access time when the data or instruction is not in the CPU's private cache, a second level cache (L2) is often used. The second level cache is external to the CPU, but supports much faster access times than the main memory.

The purpose of a cache is to increase the CPU's operating speed by reducing the number of times that the CPU has to access main memory for data and instructions. In operation, when the CPU requests to read data from or write data to a memory location having an address, the address of the data is examined by the cache to see if a corresponding address is also in the cache. If the address is not in the cache (or the address is in the cache but the data is invalid), a cache miss is declared and main memory access is required to process the cycle.

Conventional computer systems include a cache controller and a main memory controller connected either in series or in parallel. Conventional series implementations using write-back or write-through caches require an extra bus state (a penalty) to process a cache (read or write) miss cycle. The series implementations incur the penalty in all I/O and memory cache miss cycles. A conventional parallel implementation having a write-back cache requires an extra bus state to process a cache (read or write) miss memory cycle. A conventional parallel implementation having a write-through cache requires an extra bus state to process a read miss memory cycle.

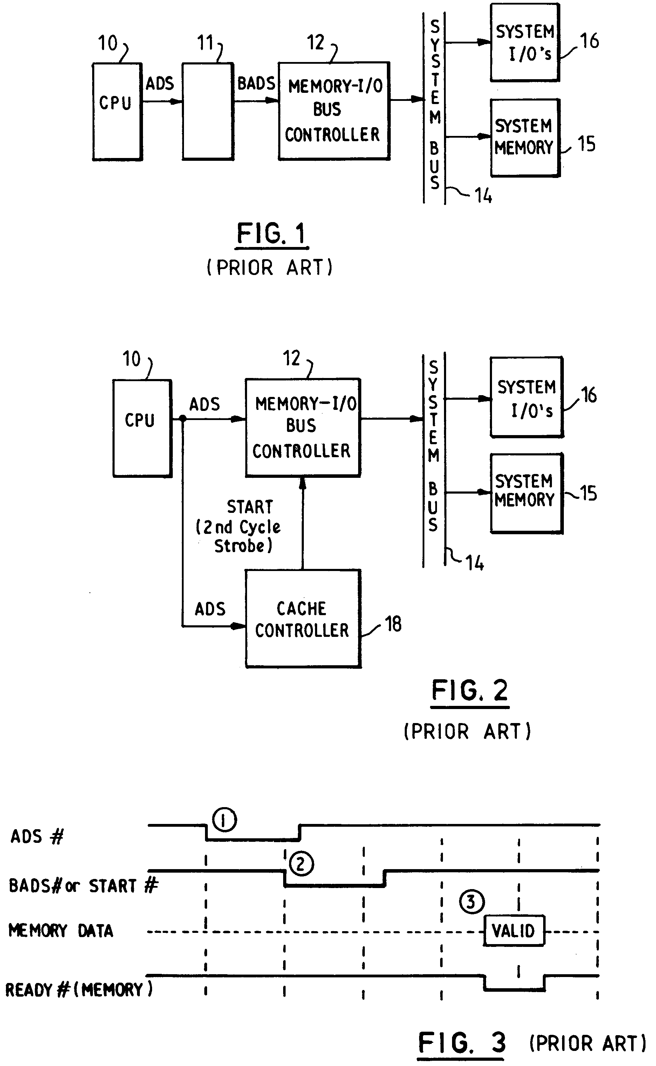

The added time delay which occurs during a cache miss is a result of a control signal which must be provided from the cache controller to the main memory controller to indicate that the cycle must be processed by the main memory. For example, Fig. 1 shows a conventional serial implementation for the write-back cache of the INTEL 80385. A CPU 10, cache controller 11 and memory controller 12 are connected in series. The memory controller 12 is coupled to a system bus 14 which can be connected to a main memory 15 and input/output (I/O) devices 16.

In operation, the CPU 10 will drive a bus cycle by activating the control signal ADS (ADress Strobe) to indicate that a valid local bus cycle is available. The cache controller 11 will receive ADS and determine whether it can process the cycle. If the cache controller 11 cannot process the cycle (cache miss), it will drive a signal BADS (Bus ADress Strobe) to the memory controller 12 to indicate that the cycle must be completed by the memory controller 12. With this implementation, all I/O and memory cycles are delayed one extra bus state during a cache miss (read or write) cycle because the memory controller 12 will not see the cycle until the cache controller 11 has determined that the cycle needs to go to the memory controller 12.

A computer system having a write-through cache with a cache controller implemented in parallel with the memory controller is dislcosed in U.S. Patent 5,210,845 and shown in a simplified form in Fig. 2. As shown therein, the cache controller 18 is in parallel with the memory controller 12 such that the ADS signal from the CPU 10 can be provided to both controllers simultaneously. The cache controller 18 generates the control signal START to indicate that a cache read miss or a write has occurred and that the current cycle must be serviced by the memory controller 12. With this implementation, memory cycles are delayed by one extra bus state during a cache read miss cycle because the cache controller 18 does not generate the START signal until the second bus state. A cache miss cycle will not delay any I/O cycles because START is not activated for I/O cycles.

Turning now to Fig. 3 there is shown a timing diagram for a read miss cycle (main memory access required) for the serial and parallel cache controller implementations described above with regard to Figs. 1 and 2. In Fig. 3, three particular timing points are identified. At a first point (1), the CPU 10 places the access address on the bus by driving ADS low during a first bus state. At point (2), the cache controllers 11 or 18 determine that the address is not present in the cache (cache miss) and drive the BADS (Fig. 1) or START (Fig. 2) signal during a second bus state. During the third bus state, the memory controller 12 will receive the BADS (Fig. 1) or START (Fig. 2) signal and continue processing the cycle. The data is then returned by the main memory (along with READY to end the cycle) during a fourth bus state at a point (3).

Since conventional serial and parallel implementations require an extra bus state to process cache miss cycles, system performance is substantially reduced. Thus, there is a need to develop a computer system which can reduce the number of bus states required to process cache miss cycles.

Accordingly the present invention provides a computer system comprising: a local bus, an input/output bus, a main memory coupled directly to said local bus, a memory controller coupled to said local bus and to said main memory, a cache coupled to said local bus and being operative to communicate with a bus master which gains control of said local bus and drives a bus cycle, a cache controller disposed within said cache, said cache controller including means for providing a signal to said memory controller during a first bus state of a cache miss cycle driven by said bus master, said control signal allowing said memory controller to process said cache miss cycle.

An embodiment is directed to a personal computer system having a cache controller in parallel with a memory controller wherein a control signal is provided from the cache controller to the memory controller during a first bus state of a cache miss cycle to eliminate an extra bus state for memory and I/O cycles that require main memory access. The cache controller and memory controller are coupled to a local bus. The cache controller is disposed within a cache which can be a write-back or a write-through cache. The cache is coupled directly to the local bus and is operative to communicate with a bus master which gains control of the local bus and drives a bus cycle. A CPU and a main memory is also coupled to the local bus. The main memory is also coupled to the memory controller. The cache and memory controllers can be disposed within a bus interface controller.

During a cache (read or write) miss cycle, the cache controller will drive a control signal (STOP0GO1) to the memory controller. STOP0GO1 is driven by the cache controller during the first bus state (T1) of the bus cycle to indicate that a cache miss (main memory access required) has ocurred and the current cycle must be completed by the memory controller. When a cache hit (no main memory access required) occurs STOP0GO1 is used to shut down the memory controller in order to allow the cache to complete the cycle. By generating STOP0GO1 during the first bus state and using it as a memory decode, no penalty is incurred for cache misses (read or write), i.e., the cycle time required to process a cache miss is equal to the time needed to process a main memory cycle.

An embodiment may operate in the following manner during cache miss cycles. After gaining control over the local bus through arbitration, a bus master will initiate a local bus cycle to read from or write to a memory location having an address by providing the address of the memory location on the local bus along with control signals indicating that a valid local bus cycle is beginning and what type of operation (read, write, etc.) is to be performed. The control signals will be received simultaneously by the cache controller and the memory controller. As a result, the cache controller and memory controller will simultaneously begin their cycles to check to see if the address is present in their respective memory arrays.

The address of the memory location will be provided to a cache tag array and a cache memory array. The cache controller will declare a miss when the address is not present in the cache tags or the data at the address in the cache is not valid. After the cache controller determines that the cycle is a cache miss cycle, the cache controller will drive STOP0GO1 high during the first bus state of the cycle to indicate that the main memory controller must continue its memory operation and process the current cycle. The memory controller will receive the STOP0GO1 signal during the first bus state and continue processing the cycle. The STOP0GO1 signal is generated during the first bus state in order to avoid any extra wait states during cache miss cycles (i.e., there is no added delay required to process a cache miss cycle other than the usual time required to process a main memory access cycle).

Thereafter, during a third bus state the memory controller will complete the cycle by (i) sending the data from the addressed memory location to the bus master over the local bus if the cycle was a read cycle or (ii) writing new data to the main memory location if the cycle was a write cycle. By generating STOP0GO1 during the first bus state, the present invention allows a cache miss cycle to be processed in three bus states (i.e., without incurring a penalty).

When the address generated by the bus master during a local bus cycle is in the cache memory array and the data is valid at that cache address a hit will be declared by the cache controller. The cache controller will then drive STOP0GO1 low (stop) during the first bus state to indicate that memory access is not required and shut down the memory controller. Next, during the second bus state, the cache will complete the read hit cycle by sending the data to the bus master and terminating the cycle. This cycle is performed with zero wait states.

The cache can be a write-back cache and as such, all write hit cycles are written by the bus master to the cache without accessing the main memory. Consequently, the operation of the cache during a write hit cycle is identical to that described above with regard to a read hit cycle except that data is written to the address in the cache memory array. Thus, a write hit cycle is also performed with zero wait states.

By implementing the cache controller and memory controller in parallel and generating a control signal (STOP0GO1) to the memory controller during the first bus state, the present invention eliminates an extra bus state conventionally required for cache miss cycles. More specifically, the present invention is a significant improvement over conventional parallel implementations which require an extra bus state to process (i) cache miss (read and write) memory cycles when the cache is a write-back cache, and (ii) cache read miss memory cycles when the cache is a write-through cache. Moreover, the present invention is also a significant improvement over conventional serial implementations which require an extra bus state during all memory and I/O cache miss (read and write) cycles when the cache is a write-back or a write-through cache.

Viewed from a further aspect the present invention provides a method for accessing data stored at a specified address comprising the steps of receiving at a cache controller, for controlling access to a cache memory, and a second controller, for controlling access to a second memory, an indication to perform an operation in relation to said address, and simultaneously instigating access to said address in said cache and second memories by said cache controller and said second controller respectively in response to said indication, and performing said operation in relation to said address in said second memory if said operation cannot be performed in relation to said address in said cache memory.

The operation can be, for example, either a read or write operation. As a consequence of the second controller, which may be a further cache controller or a main memory controller, or even a form of secondary storage controller, continuing the operation concurrently with the cahce controller, without requiring instigation by the cache controller upon determination of a miss, the time taken to execute the operation is significantly reduced.

Viewed from another aspect the present invention provides a method further comprising the step of providing a signal to said second controller during a first bus state of a cach miss cycle, said signal indicating that said second controller should continue to process said cache miss.

Viewed from a still further aspect the present invention provides a system for accessing data stored at a specified address comprising means for receiving at a cache controller, for controlling access to a cache memory, and a second controller, for controlling access to a second memory, an indication to perform an operation in relation to said address, and means for simultaneously instigating access to said address in said cache and second memories by said cache controller and said second controller respectively in response to said indication, and means for performing said operation in relation to said address in said second memory if said operation cannot be performed in relation to said address in said cache memory.

Viewed from yet another aspect the present invention provides a system further comprising means for providing a signal to said second controller during a first bus state of a cach miss cycle, said signal indicating that said second controller should continue to process said cache miss.

An embodiment of the present invention will now be described, by way of example only, with reference to the accompanying drawings in which:
fig. 1 is a schematic block diagram of a conventional serial implementation for a cache controller and a memory controller.
fig. 2 is a schematic block diagram of a conventional parallel implementation for a cache controller and a memory controller.
fig. 3 is a timing diagram illustrating operation of the conventional serial and parallel implementations of Figs. 1 and 2 during a read miss cycle.
fig, 4 is a perspective view of a personal computer embodying the present invention.
fig. 5 is an exploded perspective view of certain elements of the personal computer of Fig. 4 including a chassis, a cover, and a planar board and illustrating certain relationships among those elements.
fig. 6 is a schematic view of certain components of the personal computer of Figs. 4 and 5.
fig. 7 is a schematic diagram of the penalty free cache to memory interface of the present invention.
fig. 8 illustrates the control and directory organization of the cache of Fig. 7.
fig. 9 is a timing diagram illustrating operation of the penalty free cache to memory interface of Fig. 7 during a read miss cycle.
fig. 10 is a timing diagram illustrating operation of the penalty free cache to memory interface of Fig. 7 during a read hit cycle.

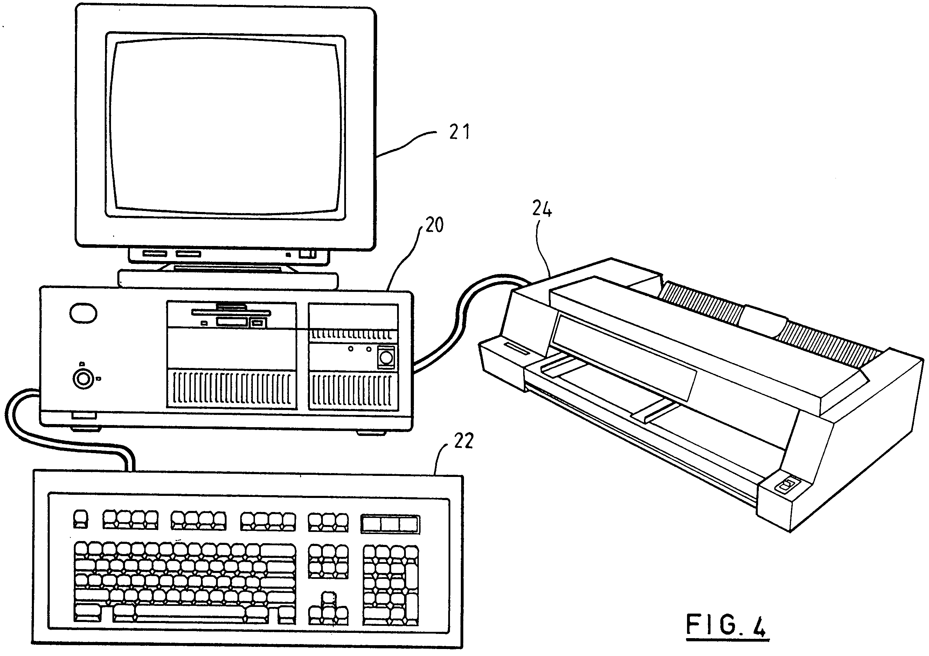

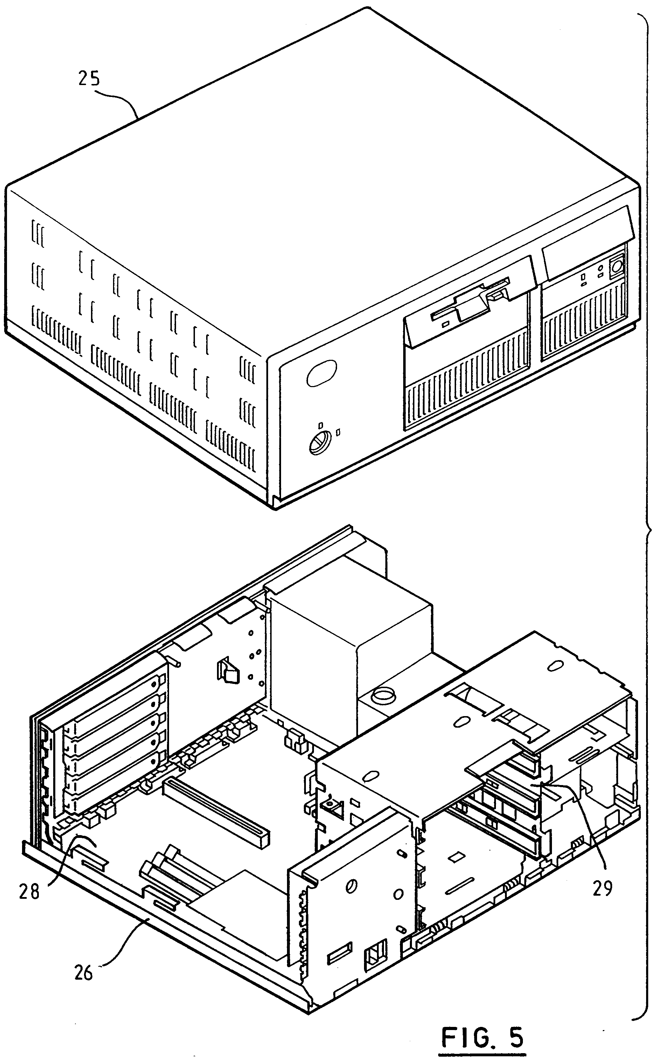

Referring to figure 4, there is shown a computer 20 which can utilise the present invention to improve the processing speed thereof. The computer 20 may have an associated monitor 21, keyboard 22 and printer or plotter 24. The computer 20 has a cover 25 which cooperates with a chassis 26 in defining an enclosed, shielded volume for receiving electrically powered data processing and storage components for processing and storing digital data, as shown in Fig. 5. At least certain of these components are mounted on a multilayer planar 28 or motherboard which is mounted on the chassis 26 and provides a means for electrically interconnecting the components of the computer 20 including those identified above and such other associated elements as floppy disk drives, various forms of direct access storage devices, accessory cards or boards, and the like.

The chassis 26 has a base and a rear panel (Fig. 5) and defines at least one open bay for receiving a data storage device such as a disk drive for magnetic or optical disks, a tape backup drive, or the like. In the illustrated form, an upper bay 29 is adapted to receive peripheral drives of a first size (such as those known as 3.5 inch drives). A floppy disk drive, a removable media direct access storage device capable of receiving a diskette inserted thereinto and using the diskette to receive, store and deliver data as is generally known, may be provided in the upper bay 29.

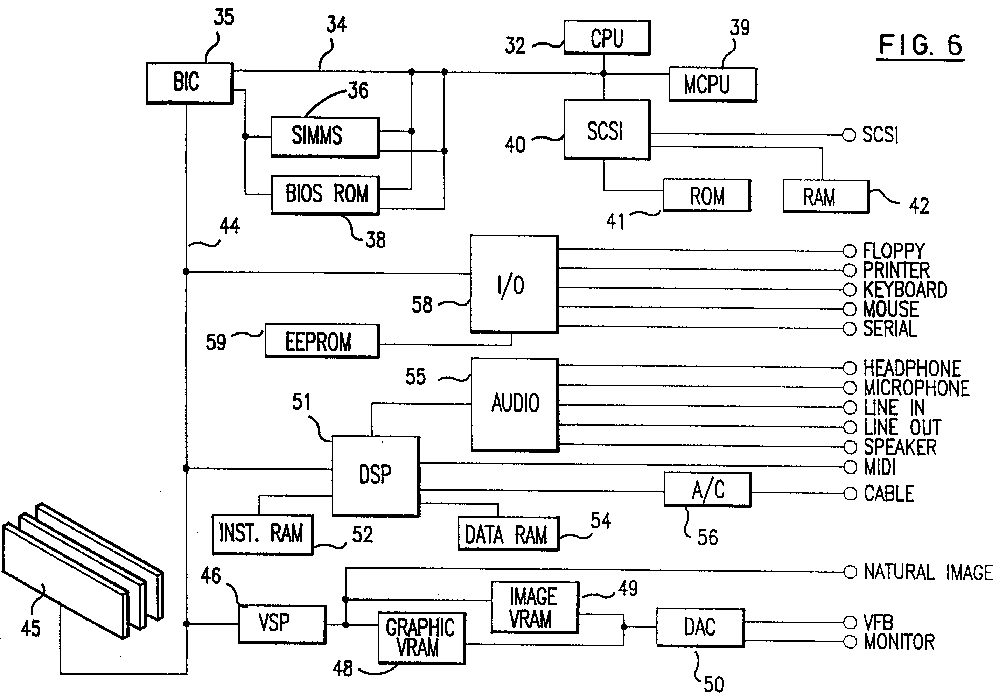

Prior to relating the above structure to the present invention, a summary of the operation in general of the personal computer system 20 may merit review. Referring to Fig. 6, there is shown a block diagram of a personal computer system illustrating the various components of the computer system such as the system 20 in accordance with the present invention, including components mounted on the planar 28 and the connection of the planar to the I/O slots and other hardware of the personal computer system. Connected to the planar is a processor 32. While any appropriate processor can be used as the CPU 32, one suitable processor is the 80386 which is sold by INTEL. The CPU 32 is connected by a high speed CPU local bus 34 to a bus interface control unit 35, to volatile random access memory (RAM) 36 (main memory) here shown as Single Inline Memory Modules (SIMMS) and to BIOS ROM 38 in which is stored instructions for basic input/output operations to the CPU 32. The BIOS ROM 38 includes the BIOS that is used to interface between the I/O devices and the operating system of the processor 32. Instructions stored in ROM 38 can be copied into RAM 36 to decrease the execution time of BIOS.

Returning now to Fig. 6, the CPU local bus 34 (comprising data, address and control components) also provides for the connection of the processor 32 with a numeric or maths coprocessor 39 and a Small Computer Systems Interface (SCSI) controller 40. The SCSI controller 40 may, as is known to persons skilled in the arts of computer design and operation, be connected or connectable with Read Only Memory (ROM) 41, RAM 42, and suitable external devices of a variety of types as facilitated by the I/O connection indicated to the right in the Figure. The SCSI controller 40 functions as a storage controller in controlling storage memory devices such as fixed or removable media electromagnetic storage devices (also known as hard and floppy disk drives), electro-optical, tape and other storage devices.

The bus interface controller (BIC) 35 couples the CPU local bus 34 with an I/O bus 44 and functions as a protocol translator, memory controller and DMA controller among other functions. By means of the bus 44, the BIC 35 is coupled with an optional feature bus such as a Micro Channel bus having a plurality of I/O slots for receiving Micro Channel adapter cards 45 which may be further connected to an I/O device or memory (not shown). The I/O bus 44 includes address, data, and control components. The I/O bus 44 may be configured to bus specifications other than the Micro Channel specification.

Coupled along the I/O bus 44 are a variety of I/O components such as a video signal processor (VSP) 46 which is associated with video RAM (VRAM) for storing character based information (indicated at 48) and for storing graphic or image based information (indicated at 49). Video signals exchanged with the processor 46 may be passed through a Digital to Analog Converter (DAC) 50 to a monitor or other display device. Provision is also made for connecting the VSP 46 directly with what is here referred to as a natural image input/output, which may take the form of a video recorder/player, camera, etc. The I/O bus 44 is also coupled with a Digital Signal Processor (DSP) 51 which has associated instruction RAM 52 and data RAM 54 available to store software instructions for the processing of signals by the DSP 51 and data involved in such processing. The DSP 51 provides for processing of audio inputs and outputs by the provision of an audio controller 55, and for handling of other signals by provision of an analog interface controller 56. Lastly, the I/O bus 44 is coupled with an input/output controller 58 having associated Electrical Erasable Programmable Read Only Memory (EEPROM) 59 by which inputs and outputs are exchanged with conventional peripherals including floppy disk drives, a printer or plotter 14, keyboard 12, a mouse or pointing device (not shown), and by means of a serial port.

Before turning in greater detail to a description of the present invention, it is appropriate to first consider the support by a personal computer of what has been known as multiple bus masters or bus masters. As here used, a "master" is a processor or any circuit designed to gain control over a bus and drive address, data and control signals on the bus. Having such capability enables a master device to transfer information between system memory and other devices.

It has been proposed that masters be divided among three types -- system master (usually the CPU), DMA controller, and bus master. The system master controls and manages the system configuration. It is usually the default master in the system. The default master owns the bus when no other master requires it. A DMA master is a special type of master which transfers data between DMA slaves and memory slaves, and does not arbitrate for the bus but services the DMA slave that is the arbitrator. As here used, a bus master arbitrates for use of the bus and supports information transfers with an I/O slave or memory slave.

What makes a device a "bus master" can be confusing, as bus masters do not necessarily require a processor. Also, a bus master may be called on to respond as a slave when accessed by another bus master. A bus master is distinguished by the capability of gaining control of the bus through arbitration and controlling the execution of a defined bus cycle. Any conventional arbitration scheme can be utilized in the present invention such as that described in co-pending, earlier filed United States Patent Application Serial No. 706,602 filed May 28, 1991 and owned in common with this invention.

Generally, there are three types of bus masters: full function, special function controllers, and programmable special function controllers. The fundamental differences among them are degrees of flexibility, function and cost. The full function bus master is the most flexible, has the most function, and costs most. Typically, a full function bus master will have its own programmable CPU and be capable of controlling all system resources, including operating system software. Special function controllers have the least flexibility, function and cost. Typically, a special function controller will use logic circuits but no CPU to perform a specific function while requiring little or no assistance from other masters. Programmable special function controllers span the range between the other two. The fundamental difference between special function and programmable special function controllers is the ability to modify the function and/or execution characteristics of the bus master. Such modification can be accomplished through use of processing units or through settable registers.

Within the defintions here given, the CPU 32, MCPU 39, and SCSI controller 40 may all function as masters directly coupled to or on the local bus 34, while the I/O controller 58, DSP 51, VSP 46 and possibly accessory boards 45 mounted in the Micro Channel slots may all function as masters directly coupled to or on the input/ouput bus 44. The BIC 35 is operative to selectively communicate with any one of the bus masters.

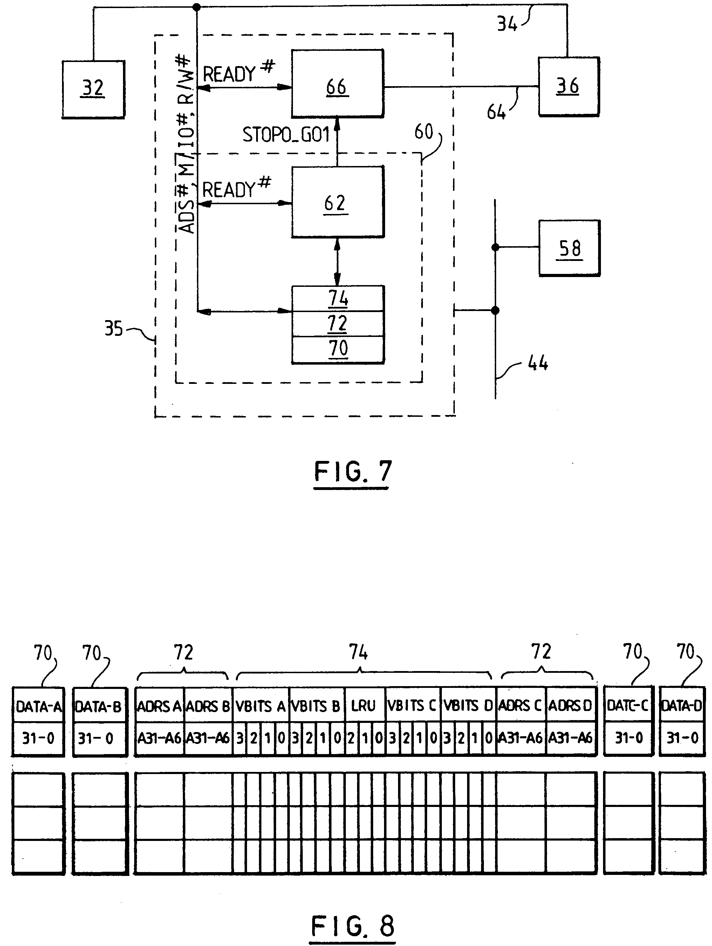

Referring to Fig. 7, there is shown a general block diagram of the penalty free cache to memory interface. A cache 60 can be incorporated within the BIC 35 and includes a cache controller 62, cache memory array 70, tag array 72 and a state array 74. The cache controller 62 is a hard wired logic circuit made up of logic gates which implements the operation which will be described hereinafter. Alternatively, the cache controller 62 can be made up of programmable logic. The cache controller 62 sits in parallel with a memory/IO controller 66 also within the BIC 35. The CPU 32 is coupled directly to the local bus 34 which includes data, address and control components. The data, address and control components of the local bus 34 are coupled to the memory controller 66, cache controller 62, memory array 70, tag array 72, state array 74 and main memory 36. The main memory 36 is also coupled to the memory controller 66 over a line 64 which includes data, address and control components.

The cache controller 62 receives a plurality of control inputs from the CPU 32 including ADS#, M/IO# and W/R#. ADS# Low ADress Strobe is generated by a local bus master (e.g., CPU 32) to indicate that a valid local bus cycle is available. This signal is also driven by the BIC 35 during snoop cycles to indicate a valid address is on the local bus 34. If there is a valid local bus cycle (ADS# low) then M/IO# indicates whether the valid local bus cycle is either a memory (M/IO# high) or an I/O cycle (M/IO# low). W/R# is a CPU driven cycle definition signal used to indicate a Write (W/R# low) or a Read (W/R# high) cycle. For each of the three control signals the setup time must be met for proper operation.

READY# is a control signal used to terminate a local bus cycle. This signal is generated by i) the memory controller 66 when main memory access is required, and ii) the cache controller 62 during a cache hit cycle. STOP0GO1 is a control signal output by the cache controller 62 and input to the memory controller 66. STOP0GO1 is driven during the first bus state T1 of a local bus cycle by cache controller 62 to indicate that a cache miss (main memory access required) has ocurred and the current cycle must be completed by the memory controller 66.

When a cache hit (no main memory access required) occurs STOP0GO1 is used to shut down the memory controller 66 in order to allow the cache 60 to complete the cycle. STOP0GO1 is not generated for I/O cycles. By generating STOP0GO1 during the first bus state and using it as a memory decode, no penalty is incurred for cache misses (read or write), i.e., the cycle time required to process a cache miss is equal to the time needed to process a main memory cycle.

Turning now to Fig. 8, there is shown the control and directory organization of the cache 60 of the present invention. The cache 60 can be a four way set associative cache. The data is stored in a memory array 70 of four static random access memory (SRAM) banks (A, B, C, D) each of which being 32 bits wide and 32 bits deep for a total of 512 bytes. Although the present invention is not limited to such a sized cache array, the remaining explanation will be based upon these numbers for illustrative purposes.

The most significant address bits corresponding to each entry in the four banks of data is saved in four groups each being a 32 x 26 tag array 72 one for each bank. Each byte for each address location in each bank has a corresponding valid bit to indicate that data is in the cache 60. Since there are four bytes in each address location there are four valid bits associated with each address resulting in a total of 16 valid bits. Three least recently used (LRU) bits are used to indicate which of the four banks of data will be replaced by a new entry when the cache 60 is full in accordance with a conventional LRU algorithm. The three LRU bits and the 16 valid bits comprise a 19 x 19 state or LRU/VALID array 74.

The cache 60 cache is preferably a write-back cache and is referred to as a second level cache (L2). Alternatively, the cache 60 can be a second level write-through cache. The cache 60 includes provisions to support snoop cycles. During operation, the cache 60 will begin its tag lookup to determine a hit or miss as soon as the bus master generates an address. Since the cache controller 62 and the memory controller 66 are connected in parallel, they will simultaneously begin their cycles to check to see if the address is present in their respective memory arrays 70 and 36 respectively. The memory controller 66 qualifies its bus cycle with ADS#, its normal decode and STOP0GO1. The cache controller 62 qualifies its bus cycle with ADS# and generates STOP0GO1 to the memory controller 66. I/O cycles are qualified with ADS# and its normal decode.

The following events all occur during the first bus state (T1) after a predetermined time interval allowing for assured recognition of control signals by the cache controller 62 and memory controller 66. After gaining control over the local bus 34 through arbitration, a local bus master such as, for example, CPU 32 will initiate a local bus cycle to read from or write to a memory location having an address by providing control signals (ADS#, R/W#, M/IO#) along with the address of the memory location on the local bus 34. The ADS#, R/W# and M/IO# signals will be driven by the CPU 32 to the appropriate levels to indicate that a valid local bus cycle is beginning and what type of operation is to be performed. These control signals along with the memory address will be received simutaneously by the cache controller 62 and the memory controller 66.

The address of the memory location will be provided to the cache memory array 70, tag array 72 and LRU/VALID array 74. The cache controller 62 will declare a cache miss after examining the address bits and the valid bits in the tag array 72 and LRU/VALID array 74 respectively and detemining that the address is not present in the cache tags or the data at the address in the cache 60 is not valid. After this determination, the cache controller 62 will drive STOP0GO1 high during a first bus state (T1 for non-pipelined and T2P for pipelined cycles) to indicate that the main memory controller 66 must continue its memory operation and process the current cycle. The memory controller 66 will receive STOP0GO1 during the first bus state and continue to process the cycle.

Thereafter, during a third bus state, the memory controller 66 will complete the cycle by driving the READY# signal low and (i) sending the data from the addressed memory location to the CPU 32 if the cycle was a read cycle or (ii) writing new data to the main memory location if the cycle was a write cycle. By generating STOP0GO1 during the first bus state, the present invention allows the main memory 36 to return the data and terminate the bus cycle in the third bus state thereby avoiding any penalty resulting from a cache miss (i.e., there is no added delay required to process a cache miss cycle other than the usual time required to process a main memory access cycle).

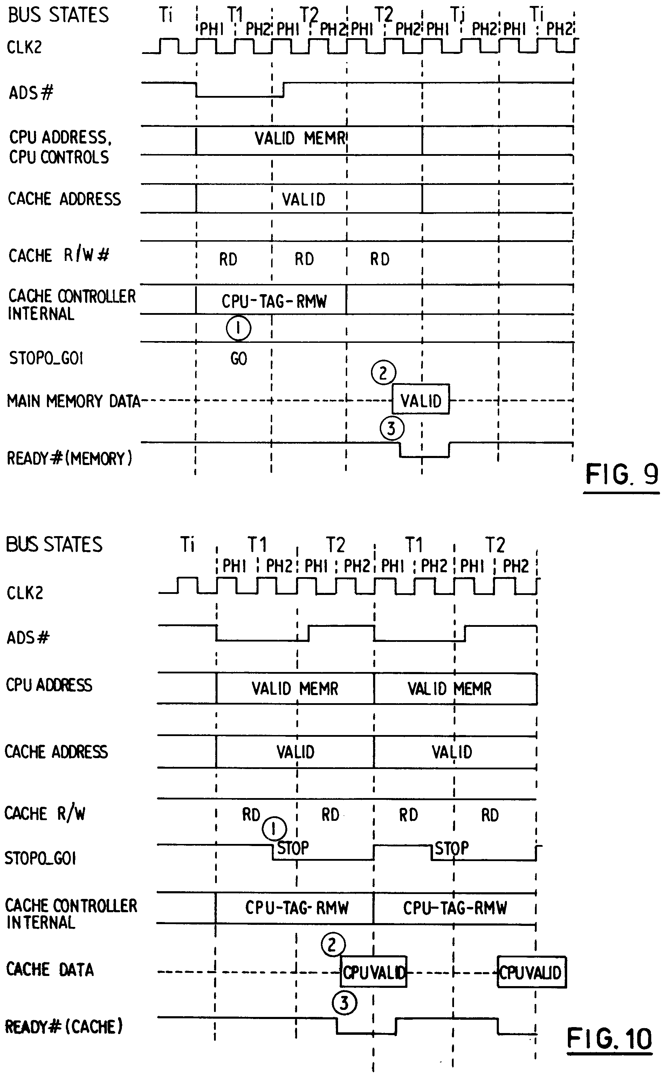

Referring now more particularly to Fig. 9, there is shown a timing diagram during a read miss cycle (main memory access required). The read miss cycle starts when the ADS# line is driven low and the CPU ADDRESS AND CONTROLS lines contain valid information during the T1 bus state. The CACHE ADDRESS, CACHE R/W# and CACHE CONTOLLLER INTERNAL are internal lines within the cache 60. The CACHE ADDRESS line indicates that the CPU address has been converted to a cache address and is thus ready to be processed by the cache controller 62. The CACHE R/W# line indicates a read operation. The CACHE CONTROLLER INTERNAL line indicates processing of local bus control signals and internal tag addresses by the cache controller 62.

During the T1 bus state, the cache controller 62 determines that the address supplied on the local bus 34 by CPU 32 is not in the tag array 74 (or that data at the address in the cache 60 is invalid) and STOP0GO1 remains high at a point (1) during the first bus state. The memory controller 66 receives STOP0GO1 during the first bus state and continues processing the cycle. Thereafter, during a third bus state the CPU 32 receives the data from the main memory 36 at a second point (2). Simultaneously, with the transfer of data the memory controller 66 terminates the read miss cycle at a third point (3) by driving READY# low. Thus, during a read miss cycle, the CPU 32 receives the data from the main memory 36 in the third bus state which is one bus state less than conventional parallel implementations using the START# signal or conventional serial implementations using BADS#.

For write-back and write-through caches, all read miss and write miss cycles require main memory access. Consequently, the operation of cache 60 (as a write-back or a write-through cache) during a write miss cycle is identical to that described above with regard to a read miss cycle except that data is written to the address in the main memory 36. In addition, the only difference in the timing diagram for a write miss cycle and Fig. 9 is that during a write miss cycle the CACHE R/W# signal will be low to indicate that the cycle is a write cycle. Thus, a write miss cycle is also completed in the third bus state (no penalty).

As an example of the operation of the present invention, the cache miss cycle described above was completed in three bus states. It should be understood by those skilled in the art of the present invention that the number of bus states required to process a cache miss cycle can vary depending on a number of variables. It should also be understood that any cache miss cycle performed with the system of the present invention will always take one less bus state than conventional parallel and serial implementations performing the same cache miss cycle. For example, if the conventional implementations process a particular cache miss cycle in 5, 6 or 7 bus states, the system of the present invetion will only require 4, 5 or 6 bus states respectively, to process the same cycle.

When the address generated by the CPU 32 during a local bus cycle is in the cache tag array 72 and the data is valid at that cache address, a cache hit will occur. The cache controller 62 will determine that the cycle is a read hit cycle by examining the address and valid bits of the tag and state arrays 74 and 76 respectively, wherein the cache controller 62 will drive STOP0GO1 low (stop) to indicate that main memory access is not required and shut down the memory controller 66. Next, the cache 60 will complete the read hit cycle by sending the data from the cache SRAMS 70 to the CPU 32 and terminating the cycle.

Referring to Fig. 10, there is shown a timing diagram during a read hit cycle (no main memory access required). The bus cycle starts when the ADS# line is driven low and the CPU ADDRESS AND CONTROLS lines contain valid information during the T1 bus state. In the sequence, the cache controller 62 determines that the address and data are valid in the cache 60 and drives the STOP0GO1 signal low at a point (1) during the first bus state. Thereafter, during the second bus state, the CPU 32 receives the data from the cache 60 and is valid in the CPU 32 at a second point (2). Simultaneously, with the transfer of data the cache 60 terminates the cycle at a third point (3). This cycle is performed in what is referred to as zero wait states because the CPU 32 received the data at the next bus cycle after the CPU's request (i.e., the CPU 32 did not have to wait to read the requested data). Of course, the cache hit cycle is performed faster than a cache miss as shown by the data being returned during the second bus state in Fig. 10 as compared to being returned during the third bus state in Fig. 9.

As described above, the cache 60 is preferably a write-back cache and as such, it treats all hit and miss cycles the same regardless of whether the cycle is a read or a write cycle. More specifically, all read hit and write hit cycles are read from or written to the cache 60 by the CPU 32 without accessing main memory 36. Consequently, the operation of cache 60 during a write hit cycle is identical to that described above with regard to a read hit cycle except that data is written to the address in the cache memory array 70. In addition, the only difference in the timing diagram for a write hit cycle and Fig. 10 is that during a write hit cycle the CACHE R/W# signal will be low to indicate that the cycle is a write cycle. Thus, a write hit cycle is also performed with zero wait states.

It should be understood that the present invention is not limited to incorporating the cache controller 62 and memory controller 66 within a single chip--BIC 35 as shown by the dashed lines in Fig. 7. The cache controller 62 and memory controller 66 can reside on different chips external to the BIC 35. When two chips are used, STOP0GO1 will be generated out of a cache controller chip and into a bus controller chip during the first bus state. In addition, the cache 60 can be any level cache in the computer system beyond a first level CPU internal cache.

Moreover, it should also be understood by those skilled in the present art that although the present invention was described with regard to a CPU initiated bus cycle, the present invention applies to a local bus cycle initiated by any local bus master which gains control over the local bus 34 through arbitration and drives the cycle as for example, MCPU 39 and SCSI 40. The device and method of the present invention also apply to I/O bus master devices (e.g., I/O controller 58, DSP 51 and VSP 46) which can communicate over the local bus 34 through arbitration with the BIC 35.

By implementing the cache controller 62 and memory controller 66 in parallel and generating STOP0GO1 to the memory controller 66 during the first bus state, the present invention eliminates an extra bus state conventionally required for cache miss cycles. More specifically, the present invention is a significant improvement over conventional parallel implementations which require the extra bus state to process (i) cache miss (read and write) memory cycles when the cache is a write-back cache, and (ii) cache read miss memory cycles when the cache is a write-through cache. Moreover, the present invention is also a significant improvement over conventional serial implementations which require the extra bus state during all memory and I/O cache miss (read and write) cycles when the cache is a write-back or a write-through cache. Thus, a personal computer system having the penalty free cache to memory interface of the present invention has a significantly faster operating speed than a personal computer system utilizing prior art parallel and serial controller systems.

An embodiment can be realised wherein said main memory comprises: volatile memory coupled directly to said local bus for volatile storage of data, storage memory devices coupled directly to said local bus for nonvolatile storage of data.

A further embodiment can be realised wherein said local bus master device includes: a numeric co-processor coupled directly to said local bus, and a storage controller coupled directly to said local bus and to said storage memory devices for regulating communications with said storage memory devices.

A still further embodiment can be realised wherein said input/output bus master device includes: an input/output controller coupled directly to said input/output bus, a digital signal processor coupled directly to said input/output bus, and a video signal processor coupled directly to said input/output bus.

## Claims

1. A computer system comprising:
a local bus,
an input/output bus,
a main memory coupled directly to said local bus,
a memory controller coupled to said local bus and to said main memory,
a cache coupled to said local bus and being operative to communicate with a bus master which gains control of said local bus and drives a bus cycle,
a cache controller disposed within said cache, said cache controller including means for providing a signal to said memory controller during a first bus state of a cache miss cycle driven by said bus master, said control signal allowing said memory controller to process said cache miss cycle.

2. The system according to claim 1, wherein said cache is a write-back cache and said cache miss cycle is a cycle driven by said bus master to read from or write to a main memory location having an address.

3. The system according to claim 2, wherein said memory controller is operative to complete the cache miss cycle by sending data from said address in main memory to said bus master or writing data to said address in main memory during a third bus state.

4. The system according to claim 1, wherein said cache is a write-through cache and said cache miss cycle is a cycle driven by said bus master to read data from a main memory location having an address.

5. The system according to claim 4, wherein said memory controller is operative to complete the cache miss cycle by sending data from said address in main memory to said bus master during a third bus state.

6. The system according to claim 1 further comprising a plurality of bus master devices, said cache being operative to communicate with any one of said plurality of bus master devices.

7. The system according to claim 6, wherein said plurality of bus master devices includes a local bus master coupled directly to said local bus.

8. The system according to claim 7, wherein said local bus master includes a microprocessor coupled directly to said local bus.

9. The system according to claim 6 further comprising a bus interface controller coupled directly to said local bus and directly to said input/output bus for providing communications between said local bus and said input/output bus, said cache and said memory controller being disposed within said bus interface controller.

10. The system according to claim 9, wherein said plurality of bus master devices includes an input/output bus master coupled directly to said input/output bus.

11. A method for performing a cache miss cycle without a penalty in a computer system comprising the steps of:
providing a local bus, an input/output bus, a main memory coupled directly to said local bus, a memory controller coupled to said local bus and to said main memory, a cache coupled directly to said local bus and being operative to communicate with a bus master which gains control of said local bus and drives a bus cycle, a cache controller disposed within said cache,
initiating a bus cycle by providing control signals from said bus master to said cache controller and said memory controller simultaneously,
determining that said cycle is a cache miss cycle,
generating a control signal from said cache controller to said memory controller during a first bus state of said bus cycle to allow the memory controller to process the bus cycle, said control signal being received by said memory controller during the first bus state.

12. The method according to claim 11, wherein said cache is a write-back cache and said initiating step includes initiating a bus cycle to read from or write to a main memory location having an address.

13. The method according to either of claims 11 or 12, further including the step of:
completing said bus cycle by performing one of the following steps during a third bus state:
(i) sending data from said address in main memory to said bus master if said bus cycle was a read cycle, or
(ii) writing data to said address in main memory if said bus cycle was a write cycle.

14. The method according to claim 11, wherein said cache is a write-through cache and said initiating step further includes initiating a bus cycle to read data from a main memory location having an address.

15. The method according to either of claims 11 or 14, further including the step of:
completing said bus cycle by sending data from said address in main memory to said bus master during a third bus state.

16. A method for accessing data stored at a specified address comprising the steps of
receiving at a cache controller, for controlling access to a cache memory, and a second controller, for controlling access to a second memory, an indication to perform an operation in relation to said address, and
simultaneously instigating access to said address in said cache and second memories by said cache controller and said second controller respectively in response to said indication, and
performing said operation in relation to said address in said second memory if said operation cannot be performed in relation to said address in said cache memory.

17. A method as claimed in claim 16, further comprising the step of
providing a signal to said second controller during a first bus state of a cach miss cycle, said signal indicating that said second controller should continue to process said cache miss.

18. A system for accessing data stored at a specified address comprising
means for receiving at a cache controller, for controlling access to a cache memory, and a second controller, for controlling access to a second memory, an indication to perform an operation in relation to said address, and
means for simultaneously instigating access to said address in said cache and second memories by said cache controller and said second controller respectively in response to said indication, and
means for performing said operation in relation to said address in said second memory if said operation cannot be performed in relation to said address in said cache memory.

19. A system as claimed in claim 18, further comprising
means for providing a signal to said second controller during a first bus state of a cach miss cycle, said signal indicating that said second controller should continue to process said cache miss.
